# Europäisches Patentamt

# European Patent Office

# Office européen des brevets

(19)

(11) Numéro de publication: **0 083 524**
**B1**

(12) # FASCICULE DE BREVET EUROPÉEN

(45) Date de publication du fascicule du brevet:
24.09.86

(51) Int. Cl.⁴: **G 01 N 11/04**, G 01 N 30/00

(21) Numéro de dépôt: **82402324.6**

(22) Date de dépôt: **17.12.82**

(54) Installation pour contrôler le fonctionnement continu d'un système chromatographique.

(30) Priorité: **29.12.81 FR 8124382**

(43) Date de publication de la demande:
**13.07.83 Bulletin 83/28**

(45) Mention de la délivrance du brevet:
**24.09.86 Bulletin 86/39**

(84) Etats contractants désignés:
**DE GB IT NL**

(56) Documents cité:
**FR-A-2 197 465**
**FR-A-2 345 716**
**US-A-3 808 877**
**US-A-3 930 403**
**US-A-4 254 656**

**REVIEW OF SCIENTIFIC INSTRUMENTS, vol. 44,
no. 9, septembre 1973, pages 1231-1233, New York
(USA); R.A.DAWE: "A method for correcting
curved-pipe flow effects occurring in coiled
capillary viscometers"**

(73) Titulaire: **SOCIETE NATIONALE ELF AQUITAINE
(PRODUCTION), Tour Aquitaine, F-92400
Courbevoie (FR)**

(72) Inventeur: **Lecacheux, Didier, 3 Allée du Pont des
Maures, F-91380 Chilly Mazarin (FR)**
Inventeur: **Lesec, James, 44 rue M. Berteaux,
F-95320 Saint Leu La Foret France (FR)**
Inventeur: **Prechner, Roland, 7 rue de Pietat,
F-64000 Pau (FR)**

(74) Mandataire: **Hirsch, Marc- Roger, 34 rue de
Bassano, F-75008 Paris (FR)**

EP 0 083 524 B1

## Description

La présente invention se rapporte à une installation de chromatographie sur gel en phase liquide ("gel permeation chromatography" ou G.P.C.). En fait, l'invention concerne une installation pour contrôler le fonctionnement continu d'un système chromatographique destiné à la caractérisation des polymères par détermination de la relation entre viscosité intrinsèque et volume d'élution et permettant la mesure de la viscosité de la phase liquide desdits polymères, la mesure différentielle de la perte de charge au cours de la mesure de la viscosité et la mesure de l'indice de réfraction de ladite phase liquide après ladite mesure de la perte de charge, ladite mesure différentielle étant transformée en signaux transmis à une chaîne de traitement d'information de façon à déterminer la viscosité intrinsèque en fonction du volume d'élution.

On peut ainsi caractériser les courbes de distribution et les masses moléculaires moyennes des polymères synthétiques ou naturels, mais aussi le taux de ramification des macromolécules et, de façon plus générale, tous les paramètres structuraux des molécules en question.

Cependant, un objet de l'invention est la réalisation d'une telle installation comportant un viscosimètre utilisable à haute température et permettant la détermination de la relation entre viscosité intrinsèque et volume d'élution permettant la mesure de la viscosité, la mesure différentielle de la perte de charge et la mesure de l'indice de réfraction afin de permettre la caractérisation des polymères, notamment des polyoléfines.

Le principe de la chromatographie par perméation de gel est simple. Il consiste à éluer une solution de macromolécules à travers un support poreux. Les plus grandes chaînes ne peuvent pénétrer que dans les pores de taille suffisante, alors que les oligomères transiteront dans une partie du volume poreux et sortiront donc plus tard de la colonne. Pour rendre compte de ce phénomène d'exclusion stérique, BENOIT a proposé l'emploi du paramètre $\{n\}.M$, qui est proportionnel au volume hydrodynamique de la macromolecule en solution ($\{n\}$ est la viscosité intrinsèque et M la masse moléculaire). La validité de ce principe d'étalonnage universel a été vérifiée aussi bien pour les polymères linéaires de toute nature que pour les espèces ramifiées.

La G.P.C. permet ainsi la séparation des constituants d'un échantillon selon leur volume hydrodynamique. C'est une méthode relative: elle nécessite un étalonnage préalable du jeu de colonnes de la forme $\log (\{n\}.M) = f(Ve)$, où Ve est le volume d'élution. La détection du polymère dans l'éluat se fait au moyen d'un détecteur de concentration (RI, UV) qui fournit une courbe de répartition en fonction du volume hydrodynamique. Mais pour atteindre les diverses masses moléculaires moyennes et éventuellement l'indice de ramification de l'échantillon analysé, il est nécessaire de mesurer la viscosité intrinsèque $\{n\}$ en fonction du volume d'élution.

L'installation selon l'invention permet le contrôle du fonctionnement continu d'un système chromatographique.

En ce qui concerne la G.P.C. sur supports classiques (garnissage 50 µ environ), la possibilité d'une détection viscosimétrique de l'effluent est apparue dès 1968. Le principe en est le suivant: à la sortie des colonnes, un siphon compteur déverse à intervalles réguliers un volume constant de la phase mobile dans un viscosimètre classique modifié en consequence. La mesure automatique des temps de chute (t) permet de déterminer la viscosité intrinsèque $\{n\}_i$ de chaque fraction i. En effet, les concentrations usuelles en G.P.C. étant toujours très faibles (C < 0,05%), on peut écrire:

$$\{n\}_i = \frac{1}{C_i} \ln \frac{t_i}{t_0}$$

où l'indice o se rapporte au solvant pur.

Les microgarnissages (10 µ environ) qui sont apparus en 1974 condamnent le système précédent. En effet, alors que le fractionnement avait lieu sur plusieurs dizaines de millilitres, le volume utile en HPLC* (high pressure liquid chromatography) peut se réduire à quelques millilitres. C'est pourquoi la G.P.C. rapide ne peut être couplée qu'à un détecteur viscosimétrique du type décrit par OUANO: un capteur de

(* chromatographie en phase liquide à pression élevée). pression mesure en continu la perte de charge dans un capillaire de très faible diamètre interne.

C'est une application de la loi de POISEUILLE

$P = k.\eta.d$

où:

P est la perte de charge,

η la viscosité absolue de la phase mobile,

d le débit,

k une constante caractéristique de l'appareil.

La viscosité intrinsèque $\{n\}_i$, s'obtient en fonction du temps selon:

2

$$\{\eta\}_i = \frac{1}{C_i} \ln \frac{t_i}{t_0}$$

le débit étant strictement constant durant toute l'analyse.

Le découpage du chromatogramme en un certain nombre de points ne dépend plus ici que des possibilités de calcul: les incréments de volume peuvent être choisis de façon à représenter n'importe quel produit par une centaine de fractions.

Des valeurs instantanées $\{\eta\}_i$, on déduit la masse moléculaire $M_i$ présente dans la fraction i grâce au principe de l'étalonnage universel:

$(\{\eta\}.M)_i = \{\eta\}_i.M_i$

Les résultats concernant le produit dans son ensemble se calculent alors facilement selon les moyennes habituelles:

$$\overline{Mn} = \frac{\sum\limits_i C_i}{\sum\limits_i \frac{C_i}{M_i}} \quad , \qquad \overline{Mw} = \frac{\sum\limits_i C_i M_i}{\sum\limits_i C_i} \quad , \qquad \{\eta\} = \frac{\sum\limits_i \{\eta\}_i C_i}{\sum\limits_i C_i}$$

Dans le cas de polymères ramifiés, on déduit aisément de la loi de viscosité expérimentale, la variation de la fréquence des ramifications avec la masse moléculaire.

L'état de la technique ne comprend pas d'indications relatives à l'emploi d'une hélice pour la mesure de la viscosité d'une phase liquide comprenant un constituant de grande masse moléculaire avec détermination de la mesure différentielle de la pression, sans utilisation d'un piston et sans la nécessité d'un étalonnage.

En effet, le US-A-3 930 403 présente un appareil comprenant un piston pour diverses applications dans le domaine des techniques sous pression élevée. L'essence de la solution réside dans l'emploi d'un piston se mouvant dans un espace intérieur divisé en deux parties séparées par un segment étanche aux gaz. Le piston est un élément mobile. La mesure effectuée à l'aide de ce piston nécessite la détermination du rapport des volumes desdites parties et la détermination des valeurs des pressions aux extrémités.

Par ailleurs, l'article publié dans Review of Scientific Instruments, vol. 44, n° 9, septembre 1973, pages 1231-1233 décrit un dispositif pour mesurer le temps nécessaire pour que la pression d'un réservoir passe d'une pression $P_1$ à une pression $P_2$ en se vidant dans un autre réservoir à travers un capillaire. Ce document ne concerne que la détermination de la viscosité d'une phase gazeuse et ne concerne aucunement le contrôle du fonctionnement continu d'un système chromatographique destiné à la caractérisation des polymères. Ce document n'enseigne ni ne suggère ledit contrôle par détermination de la relation entre viscosité intrinsèque et volume d'élution permettant la mesure de la viscosité, la mesure différentielle de la perte de charge et la mesure de l'indice de réfraction afin de permettre la caractérisation des polymères, notamment des polyoléfines.

Une installation selon l'invention est caractérisée en ce que la mesure de la viscosité est effectuée dans un viscosimètre comprenant un tube capillaire de diamètre intérieur compris entre 0,20 et 0,30 mm enroulé selon une hélice, le capillaire de mesure ayant une longueur de l'ordre de quelques mètres, le diamètre de l'hélice étant d'au moins 10 cm et la mesure de la pression différentielle dans le capillaire étant effectuée à débit constant à l'aide de capteurs de pression en aval et en amont du capillaire de mesure, reliés aux deux tés de raccordement auxquels aboutissent respectivement les conduits d'amenée et de départ de ladite phase liquide.

L'installation selon l'invention est particulièrement destiné à
- l'étude des polymère organosoluble à température ambiante,
- la G.P.C. dans l'eau,
- la caractérisation des polyoléfines à haute température, et.

Par ailleurs, une installation selon l'invention peut constituer un débimètre extrêmement sensible et fournir ainsi un moyen de contrôle du fonctionnement d'un système chrommatographique dans son ensemble.

Comme on le verra ci-après, les deux capteurs de pression permettent une mesure précise de la perte de charge dans le capillaire de mesure seul, indépendamment des caractéristiques d'écoulement du circuit en aval de ce capillaire. On obtient ainsi une détermination précise de la viscosité, grâce en outre à l'enroulement de très grand diamètre relatif de ce capillaire, comme expliqué plus loin. Les valeurs de viscosité intrinsèque effectuées en continu avec le viscosimètre selon l'invention sont en bonne correspondance avec les mesures statiques de cette viscosité.

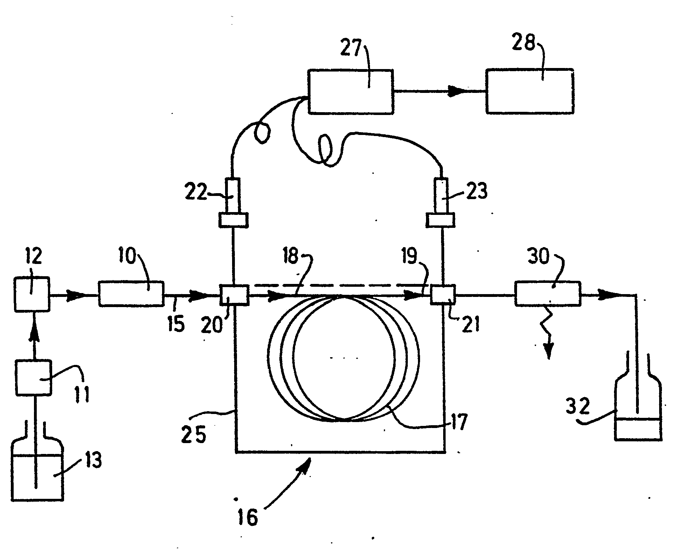

Les caractéristiques et avantages de l'invention ressortiront d'ailleurs mieux de la description suivante donnée uniquement à titre d'exemple, en référence aux dessins annexés dont la figure unique illustre schématiquement une installation pour la mesure en continu de la viscosité de la phase liquide sortant d'une colonne de chromatographie sur gel en phase liquide, comprenant un viscosimètre selon l'invention.

Dans la forme de réalisation décrite et représentée à la figure unique annexée, un viscosimètre est associé à une installation de chromatographie sur gel en phase liquide, qui elle-même est associée à un réfractomètre permettant, par mesure des variations d'indice de la phase liquide, de suivre sa concentration en polymère.

L'installation comprend, de manière habituelle, un jeu de colonnes de chromatographie 10, équipé d'une pompe 11 et d'un injecteur 12, la pompe étant alimentée en solvant 13, par exemple en THF.

La sortie 15 des colonnes 10 est raccordée au viscosimètre proprement dit, repéré par la référence générale 16. Le viscosimètre comprend un capillaire de mesure 17, constitué par un tube capillaire de grande longueur, quelques mètres, par exemple 3 mètres, d'un diamètre intérieur réduit, compris sensiblement entre 0,20 et 0,30 mm enroulé sur lui-même pour former sensiblement une hélice de grand diamètre, d'au moins 10 cm, par exemple 16 cm. Le volume interne du capillaire est extrêmement réduit de l'ordre de quelques centaines de microlitres.

A l'entrée 18 et à la sortie 19 du capillaire de mesure 17, sont raccordés au moyen de deux raccords en T 20 et 21 respectivement, deux détecteurs de pression semblables 22 et 23 respectivement.

Le tube capillaire 17 est, par exemple, immergé dans un bain thermostaté 25 dont la température est maintenue à une valeur voisine de la température ambiante; un tel bain thermostaté peut cependant être utilisé pour des températures de fonctionnement atteignant 100°C.

Dans le cas où l'installation selon l'invention est appliqué à la mesure de polyoléfines, c'est-à-dire doit fonctionner à des températures élevées de l'ordre de 150°C, on place l'ensemble du dispositif, à l'exception toutefois du solvant 13 à l'entrée, et 32 à la sortie, dans une enceinte thermostatée maintenue à cette température élevée.

Les capteurs de pression 22 et 23 sont reliés à un amplificateur 27 et leurs indications, amplifiées par ce dernier, sont exploitées dans une chaîne de traitement schématisée en 28. On peut mesurer ainsi, avec précision, la perte de charge dans le capillaire et, par application de la formule de POISEUILLE, remonter comme on l'a vu plus haut à la viscosité intrinsèque {n}.

La sortie 19 du tube capillaire est raccordée à un réfractomètre 30 et le solvant usé qui sort de celui-ci après mesure est recueilli en 32. Le réfractomètre 30 fournit un signal 33, fonction de la concentration, qui complète les indications fournies par le viscosimère.

On notera que grâce à la présence des deux détecteurs de pression 22 et 23, on ne mesure que la perte de charge intervenant véritablement dans le capillaire de mesure, en éliminant totalement celle qu'introduit inévitablement le réfractomère ou tout autre composant du circuit aval.

Les inventeurs ont montré, en outre, que dans un capillaire, l'enroulement de celui-ci était à l'origine d'une perte de charge singulièe P' venant s'ajouter au terme de POISEUILLE Pp; ainsi la perte de charge totale P = P' + Pp.

Le terme P' vient fausser le principe même du viscosimètre continu, et les viscosités intrinsèques sont alors systématiquement trop faibles. Il semble dû à l'effet de la force centrifuge et devient négligeable pour des spires d'enroulement d'un diamètre supérieure à 10 cm, ce qui a été adopté dans le viscosimètre selon l'invention.

Dans ce cas, la loi de POISEUILLE est parfaitement vérifiée, quelles que soient les qualités de l'écoulement en aval du deuxième capteur 23. Les mesures de viscosité intrinsèques sont alors en excellent accord avec les résultats des méthodes statiques.

Selon un mode de réalisation de l'invention, le capillaire de mesure est disposé dans un bain thermostaté; lorsqu'il s'agit d'opérer à des températures élevées, par exemple 150°C dans le cas de polyoléfines, l'ensemble du dispusitif, à l'exception du solvant, à l'entrée 13 et a la sortie 32, est placé dans une enceinte maintenue à cette température élevée de 150°C.

Selon un mode de réalisation de l'invention, le capillaire de mesure est disposé dans un bain thermostaté, de préférence l'ensemble sauf 13 et 32, est dans une enceinte thermostatée par exemple à 150°C ou autre haute température. Le bain 25 est plutôt réservé aux températures voisines de l'ambiante, en tout cas <80-100°C.

Selon un autre mode de réalisation de l'invention, le diamètre de l'hélice du capillaire est d'au moins 10 cm, de préférence 16-17 cm, le diamètre intérieur de celui-ci de 0,27 mm et la longueur totale d'environ 3 m.

Selon un autre mode de réalisation de l'invention, les capteurs de pression sont raccordés aux deux bornes 20 et 21 aval et amont du capillaire de mesure par deux tés de raccordement auxquels aboutissent respectivement les conduits d'amenée et de départ de la phase liquide mesurée.

Les capteurs de pression sont associés à un dispositif de traitement des signaux qu'ils délivrent, comprenant un amplificateur.

La présente invention a également pour objet une installation pour la mesure en continu de la viscosité de la phase liquide sortant d'une colonne de chromatographie en phase liquide, équipée d'une pompe et d'un injecteur, cette installation telle que définie ci-dessus étant caractérisée en ce que la sortie de la colonne est reliée à l'entrée du capillaire de mesure et les indications des capteurs de pression sont transmises à une chaîne de traitement d'informations intégrée à l'installation.

Selon une autre forme d'exécution de l'installation précitée, la sortie du capillaire de mesure est reliée à un réfractomètre pour la mesure de l'indice de réfraction de la phase liquide ayant traversé le capillaire, ledit

4

réfractomètre étant intégré à l'installation.

## Revendications

1.- Installation pour contrôler le fonctionnement continu d'un système chromatographique destiné à la caractérisation des polymères par détermination de la relation entre viscosité intrinsèque et volume d'élution et permettant la mesure de la viscosité de la phase liquide desdits polymères, la mesure différentielle de la perte de charge au cours de la mesure de la viscosité et la mesure de l'indice de réfraction de ladite phase liquide après ladite mesure de la perte de charge, ladite mesure différentielle étant transformée en signaux transmis à une chaîne de traitement d'informations (28) de façon à déterminer la viscosité intrinsèque en fonction du volume d'élution, cette installation étant caractérisée en ce que la mesure de la viscosité est effectuée dans un viscosimètre (16) comprenant un tube capillaire (17) de diamètre intérieur compris entre 0,20 et 0,30 mm enroulé selon une hélice d'un diamètre important par rapport à celui du tube, le capillaire de mesure (17) ayant une longueur de l'ordre de quelques mètres, le diamètre de l'hélice étant d'au moins 10 cm et la mesure de la pression différentielle dans le capillaire (17) étant effectuée à débit constant à l'aide de capteurs de pression en aval (22) et en amont (23) du capillaire de mesure (17), reliés aux deux tés de raccordement (20, 21) auxquels aboutissent respectivement les conduits d'amenée (18) et de départ (19) de ladite phase liquide.

2.- Installation selon la revendication 1, caractérisée en ce qu'elle comporte une colonne (10) de chromatographie en phase liquide équipée d'une pompe (11) et d'un injecteur (12), la sortie (15) de la colonne (10) étant reliée à l'entrée (18) du capillaire de mesure (17) et les indications des capteurs de pression (22, 23) étant transmises à la chaîne de traitement d'informations (28) intégrée à l'installation.

3.- Installation selon la revendication 2, caractérisée en ce que les capteurs de pression (22, 23) sont associés au dispositif de traitement (28) des signaux qu'ils délivrent, comprenant un amplificateur (27).

4.- Installation selon une quelconque des revendications 2 ou 3, caractérisée en ce que la sortie (19) du capillaire de mesure (17) est reliée à un réfractomètre (30) pour la mesure de l'indice de réfraction de la phase liquide ayant traversé le capillaire (17), ledit réfractomètre étant intégré à l'installation.

## Patentansprüche

1.- Einrichtung zur Kontrolle des kontinuierlichen Betriebs eines chromatographischen Systems zur Kennzeichnung von Polymeren durch Bestimmung der Beziehung zwischen Eigenviskosität (Intrinsikviskosität) und Schlämmungsvolumen, sowie zur Messung der Viskosität der flüssigen Phase der Polymere, zur Differentialmessung des Druckabfalls während der Messung der Viskosität und zur Messung des Brechungskoeffizienten der flüssigen Phase nach der Messung des Druckabfalls, wobei die Differentialmesswerte in Signale umgewandelt werden, die einer Datenverarbeitungskette (28) übermittelt werden, um die Eigenviskosität in Anhängigkeit vom Schlämmungsvolumen zu bestimmen, dadurch gekennzeichnet, dass die Viskositätsmessung durch ein Viskosimeter (16) erfolgt, das ein Kapillarrohr (17) mit einem Innendurchmesser von 0,20 bis 0,30 mm besitzt und schraubenförmig gewunden ist, wobei das Mess-Kapillarrohr (17) eine Länge von einigen Metern und die Schraube einen Durchmesser von wenigstens 10 cm besitzt, während der Differentialdruck im Kapillarrohr (17) bei konstanter Durchflussmenge vermittels stromabwärts (22) und stromaufwärts vom Mess-Kapillarrohr (17) angeordneter Druckfühler erfolgt, die mit den beiden T-Anschlußstücken (20, 21) verbunden sind, in welche die Zuflussleitung (18) und die Abflussleitung (19) für die flüssige Phase münden.

2.- Einrichtung nach Anspruch 1, dadurch gekennzeichnet, dass sie eine eine Pumpe (11) und einen Injektor (12) aufweisende Flüssigkeits-Chromatographiesäule (10) umfasst, wobei der Auslass (15) der Säule (10) mit dem Einlass (18) des Mess-Kapillarrohrs (17) verbunden ist und die Anzeigen der Druckfühler (22, 23) an die zu der Einrichtung gehörende Datenverarbeitungskette (28) abgegeben werden.

3.- Einrichtung nach Anspruch 2, dadurch gekennzeichnet, dass die Druckfühler (22, 23) mit der einen Verstärker (27) aufweisenden Vorrichtung (28) zur Verarbeitung der von ihnen erzeugten Signale verbunden sind.

4.- Einrichtung nach Anspruch 2 oder 3, dadurch gekennzeichnet, dass der Auslass (19) des Mess-Kapillarrohrs (17) zwecks Messung des Brechungskoeffizienten der flüssigen Phase nach deren Durchfluss durch das Kapillarrohr (17) an ein zu der Einrichtung gehörendes Refraktometer (30) angeschlossen ist.

## Claims

1.- Installation for controlling the continuous operation of a chromatographic system adapted to characterize polymers by determining the relation between the intrinsic viscosity and the elution volume, to measure the

5

viscosity of the liquid phase of said polymers, to measure differentially the pressure decrease during measurement of the viscosity, and to measure the refractive index of said liquid phase after measuring said pressure decrease, said differential measurement being converted into signals transmitted to a data processing chain (28) for determining the intrinsic viscosity as a function of the elution volume, said installation being characterized in that the viscosity is measured in a viscosimeter (16) comprising a capillary tube (17) having an inner diameter comprised between 0.20 and 0.30 mm, that is wound into the shape of a helix, the measuring capillary tube (17) having a length in the order of several meters, the diameter of the helix being at least equal to 10 cm and the measurement of the differential pressure in the capillary tube (17) being effected at a constant flow rate by means of pressure detectors provided downstream (22) and upstream (23) from the measuring capillary tube (17) and connected to two T-piece connectors (20, 21) into which open, respectively, the inlet (18) and outlet (19) conduits for said liquid phase.

2.- Installation according to claim 1, characterized in that it comprises a liquid phase chromatography column (10) provided with a pump (11) and in injector (12), the outlet of the column (10) being connected to the inlet (18) of the measuring capillary tube (17) and the indications of the pressure detectors (22, 23) being transmitted to the data processing chain (28) which is integrated in the installation.

3.- Installation according to claim 2, characterized in that the pressure detectors (22, 23) are associated to the device (28) for the data which they deliver, said device comprising an amplifier (27).

4.- Installation according to any one of claims 2 or 3, characterized in that the outlet of the measuring capillary tube (17) is connected to a refractometer (30) for measuring the refractive index of the liquid phase which has flown through the capillary tube (17), said refractometer being integrated in the installation.